# EUROPEAN PATENT APPLICATION

(11) **EP 4 451 177 A1**
(43) Date of publication of application: **23.10.2024**
(21) Application number: 24170582.1
(22) Date of filing: 16.04.2024
(51) Int. Cl.: G06N 3/09, G06N 3/098

(54) **GROUP PERSONALIZED FEDERATED LEARNING**

(30) Priority: 17.04.2023 US 202363459803 P; 09.04.2024 US 202418630586
(71) Applicant: Meta Platforms Technologies, LLC, Menlo Park, CA 94025 (US)
(72) Inventor: Zhe, Liu, Menlo Park (US); Yue, Hui, Menlo Park (US); Fuchun, Peng, Menlo Park (US)
(74) Representative: Murgitroyd & Company

(57) **Abstract**

A system and method facilitating group personalized federated learning are provided. The system may provide a global machine learning model, generated based on federated learning, to communication devices. The system may also receive model parameters from the communication devices based in part on the communication devices determining local training data generated by the communication devices implementing the global machine learning model. The system may also determine, based on the model parameters from the communication devices, groups of the communication devices and may assign a group specific machine learning model(s), among a plurality of group specific machine learning models, to the groups. The plurality of group specific machine learning models may be associated with the global machine learning model. The system may also provide respective group specific machine learning models, among the plurality of group specific machine learning models, to subsets of communication devices of the groups of the communication devices.

## Description

### FIELD OF THE INVENTION

This disclosure relates generally to machine learning, and more specifically to federated learning based on multiple client devices.

### BACKGROUND

With advances in mobile technologies, hosting a machine learning model entirely on-device may have important implications from a reliability, latency, and privacy perspective. Particularly, the privacy preserving constraint may require user data to stay on their local devices. It is thus challenging to perform model adaptation on user devices to address any mismatch between server-side training data and actual data received on local devices.

Federated learning (FL) may allow mobile devices to collaboratively train a machine learning model while keeping the training data on device. Conventional FL training typically trains a single global model that is used for all mobile devices. A global model may be trained and provided to client devices. Each client device may conduct additional training on its local dataset. Typically, a majority of users only have a few training examples, making it challenging to improve the performance of a machine learning model for individual client devices.

As such, it may be beneficial to provide an efficient and reliable mechanism to enable obtaining of additional training data to improve the performance of a machine learning model for client devices.

### SUMMARY

Some examples of the present disclosure may provide techniques for performing group personalized federated learning. The techniques/approaches may include a number of phases. In one phase, federated learning training may be applied until convergence of a global federated learning model is achieved. In this regard, convergence of the global federated model may refer to the point at which the federated learning training process may reach a stable state and the parameters (e.g., model parameters) of the model may have settled on values. A resulting global model may be shared or provided to all client devices associated with a system, network and/or application(s). In another phase, the federated learning client devices may be partitioned or assigned into several distinct groups of client devices. For each group of client devices, the example aspects of the present disclosure may further fine-tune a trained global federated

learning model in a federated learning framework by utilizing the local data from the client devices in the group. The client devices may be assigned to specific distinct groups based on similar shared characteristics (e.g., similar demographics, profiles, etc.), and/or similar model parameters among client devices or the like. In this regard, each assigned/partitioned group of client devices may share a specific/distinct model (e.g., a machine learning (ML) model and/or an artificial intelligence (Al) model). In another phase, the example aspects of the present disclosure may perform local personalization. In this regard, for each group specific model determined, the example aspects of the present disclosure may further fine-tune the group specific models stored locally on the client devices based in part on utilizing the local training data of all/each, or a subset, of the client devices of the corresponding groups.

In this manner, some example aspects of the present disclosure may facilitate partitioning/assigning of groups among communication devices of users, to enable the communication devices of the groups to leverage the additional knowledge/information learned from the training data of other communication devices in their group to enhance their own personalized model that may be stored locally on, and tailored for, the communication device.

According to a first aspect, there is provided a method comprising: providing a global machine learning model, generated based on federated learning, to a plurality of communication devices; receiving one or more model parameters from the plurality of communication devices based in part on the plurality of communication devices determining local training data generated by the plurality of communication devices implementing the global machine learning model; determining, based on the one or more model parameters from the plurality of communication devices, one or more groups of the plurality of communication devices and assigning at least one group specific machine learning model, among a plurality of group specific machine learning models, to the one or more groups, wherein the plurality of group specific machine learning models are associated with the global machine learning model; and providing respective group specific machine learning models, among the plurality of group specific machine learning models, to subsets of communication devices of the one or more groups of the plurality of communication devices.

The method may further comprise: receiving updated model parameters, from the subsets of the communication devices of the one or more groups, in response to the subsets of the communication devices determining items of local training content generated by the subsets of the communication devices implementing a respective group specific machine learning model assigned to at least one group of the one or more groups.

The method may further comprise generating other machine learning models. At least one of the other machine learning models may be specifically tailored to the communication devices of the one or more groups in response to receiving the updated model parameters from the subsets of the communication devices of the one or more groups.

The other machine learning models may be different machine learning models personalized for at least one user of a communication device of the subsets of the communication devices.

The other machine learning models may be associated with the global machine learning model.

The method may further comprise: determining at least one perplexity value indicating an improvement of group personalized federated learning associated with the one or more groups in relation to one or more other types of federated learning in response to implementing the at least one of the other machine learning models.

Receiving the one or more model parameters may further comprise determining that the local training data satisfies a predetermined threshold of training data.

Determining the one or more groups of the plurality of communication devices and the assigning of the at least one group specific machine learning model to the one or more groups may comprise determining one or more shared characteristics of users of the communication devices or determining that items of the one or more model parameters are similar among the communication devices of the one or more groups.

The shared characteristics of the users may comprise a plurality of determined items of demographic information that the users have in common.

According to a second aspect, there is provided an apparatus comprising: one or more processors; and at least one memory storing instructions, that when executed by the one or more processors, cause the apparatus to carry out the method of the first aspect.

According to a third aspect, there is provided a computer-readable medium storing instructions that, when executed by a processor, cause the processor to carry out the method of the first aspect. The medium may be non-transitory.

According to a fourth aspect, there is provided a computer program product comprising instructions which, when the program is executed by a computer, cause the computer to carry out the method of the first aspect.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, there are shown in the drawings examples of the disclosed subject matter; however, the disclosed subject matter is not limited to the specific methods, compositions, and devices disclosed. In addition, the drawings are not necessarily drawn to scale. In the drawings:
FIG. 1 is a diagram of an exemplary network environment in accordance with an example of the present disclosure.
FIG. 2 is a diagram of an example federated learning system in accordance with an example of the present disclosure.
FIG. 3 is a diagram of an exemplary communication device in accordance with an example of the present disclosure.
FIG. 4 is a diagram of an exemplary computing system in accordance with an example of the present disclosure.
FIG. 5 is a diagram illustrating federated learning training in accordance with an example of the present disclosure.
FIG. 6 is a diagram illustrating partitioning of communication devices into several distinct groups to fine tune a global federated learning model in a federated learning framework for the specific distinct groups of communication devices in accordance with an example of the present disclosure.
FIG. 7 is a diagram illustrating that for each group-specific model, local personalization may be performed utilizing local training data of the corresponding communication devices in accordance with an example of the present disclosure.
FIG. 8 is a diagram of a table illustrating perplexity results on a video evaluation dataset in accordance with an example of the present disclosure.
FIG. 9 illustrates an example of a machine learning framework in accordance with one or more examples of the present disclosure.
FIG. 10 illustrates an example flowchart illustrating operations for providing group personalized federated learning in accordance with an example of the present disclosure.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Some examples of the present invention will now be described more fully hereinafter with reference to the accompanying drawings, in which some, but not all examples of the invention are shown. Indeed, various examples of the invention may be embodied in many different forms and should not be construed as limited to the examples set forth herein. Like reference numerals refer to like elements throughout. As used herein, the terms "data," "content," "information" and similar terms may be used interchangeably to refer to data capable of being transmitted, received and/or stored in accordance with examples of the invention. Moreover, the term "exemplary", as used herein, is not provided to convey any qualitative assessment, but instead merely to convey an illustration of an example. Thus, use of any such terms should not be taken to limit the scope of examples of the invention.

As defined herein a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of Augmented/Virtual/Mixed Reality.

In recent years, there has been an increase in use of distributed learning techniques such as federated learning (FL). FL has been applied in many applications, for example, smart keyboard suggestion, and speech recognition. Specifically, FL distributes the training process among a large number of client devices, with each client device learning from local private data and calculating model updates independently, then uploading those updates to a central server for aggregation. The updated model may be subsequently delivered to each client device, after which this process may be repeated until convergence.

Conventional FL training frameworks typically lead to a single global model that is used for everyone. However, FL faces challenges in the presence of heterogeneous local data distributions, which is common in practical applications. Personalized FL addresses such performance issues and may mitigate the potential client drift. In personalized FL, each client may have its own personalized on-device model for inference. Oftentimes, a two-step global FL training followed by local fine-tuning may be adopted for personalization in many FL applications. The process may start with training a global model using the FL framework. Upon model convergence, each client device may conduct further on-device adaptation, which may involve additional training on its local dataset for several iterations.

In practice, a long-tail traffic pattern may be very common and there is typically a highly skewed distribution on a number of training examples per client. Thus, when a majority of users only have a few training examples, fine-tuning a large global FL model on insufficient local data may not be able to improve the performance for individual clients or may tend to suffer from overfitting.

According to an example aspect of the present disclosure, a system may partition the FL clients into different groups. The system may utilize such cluster information to help mitigate the heterogeneity across different clients. Therefore, the system may enhance personalization performance within-group knowledge sharing among clients for each group. Here, clients in the same group may have similar characteristics and group-level knowledge sharing may be beneficial for personalization. These groups may exist naturally or may be inferred from data. For example, groups of client devices may be generated based on demographic attributes of users of the client devices and/or attributes of client devices such as locations of client devices. Groups of client devices may also be determined by clustering model parameters of different devices to group devices that fall within the same cluster determined based on vector differences between model parameters of the client devices. For example, clustering applications (for example, k-means applications) may be applied on the model parameters of different communication devices to partition the communication devices (e.g., clients) into different groups. Such knowledge sharing may also be conducted in an FL framework since raw data typically has to stay/remain on devices.

Described herein is a system for performing group personalized FL. The approach may include a number of phases. In the first phase, FL training until convergence may be implemented. The resulting global model may be shared across all clients. In the second phase, the FL clients may be partitioned into several distinct groups. Then for each group of clients, the trained global FL model may be further fine-tuned in the FL framework using the local data from the clients in that group. Therefore, each group of clients may share a specific model. In the third phase, the system may perform local personalization. Given each group specific model obtained based on the second phase, the system may further fine-tune the group specific models using the local training data of each of the clients of the corresponding group. The resulting personalized model may be used for on-device inferences per client. For example, the personalized model may be utilized to make determinations/predictions associated with the personalized model.

Federated learning or collaborative learning may allow a central server to distribute ML models to a number of local sites (i.e., federated nodes) for training these ML models based on respective local data samples on these local sites. The distributed ML models may be separately trained on respective local sites based on corresponding local data. The trained models and some parameters may be sent back to the central server to be aggregated into the global model. As a result, federated learning may allow ML models and/or AI models to be trained without transmitting the site data to other sites or the central server, thereby protecting data privacy. However, traditional federated learning may lack mechanisms to track and enforce data sharing policies and may be less-optimal for training ML models and/or AI models in many respects. For example, some sites may have similar data which, if combined, may make training more effective. However, because traditional federated learning may lack mechanisms to track data sharing policies, traditional federated learning may not able to cause data to be shared between these sites even if sharing of this data is permitted by corresponding policies.

Additionally, federated learning may be a machine learning technique that may train an application(s) (apps) (e.g., ML models) across multiple decentralized computing systems (e.g., servers, edge devices, computers at different local sites) holding local data samples, without exchanging their data samples between each other. This approach may stand in contrast to traditional centralized machine learning techniques where all data samples are uploaded to one server, as well as to classical decentralized approaches which typically assume that local data samples are identically distributed. Federated learning may enable multiple actors (e.g., a central server and a number of federated nodes (i.e., local sites)) to build a common and robust machine learning model without sharing data between these actors, thus addressing critical issues such as data privacy, data security, data access rights and access to heterogeneous data. To ensure good task performance of a final, central machine learning model, federated learning may rely on an iterative process which includes an atomic set of client-server interactions known as a federated learning round. Each round of this process may include transmitting the current global model to participating local sites, training local models on these local sites to produce a set of potential model updates at each locate site, and aggregating and processing these local updates into a single global update and applying the updates to the global model.

In some aspects of the present disclosure, a federated node or a local site may refer to an entity having one or more local computing devices that may be used during the federated learning process. The term "federated node" and "locate site" may be used in an interchangeable manner. The local computing devices may receive models that need to be trained from the central server and to train these models locally based on local data samples that the local computing devices have access to. The federated learning system may include a number of federated nodes which may be connected to a central server through communication networks and may receive ML models and/or Al models from the central server. In some aspects of the present disclosure, a global model may refer to a ML model or an AI model that is or may be trained. The global model may be hosted on a central server and may be distributed to one or more federated nodes (e.g., local sites) with initial parameters or current parameters. After the model is transmitted or distributed to these local sites, these models may be referred to as local models (hosted on respective local sites). These local models may be trained on respective local sites based on local data samples of these local sites. The global model may update its parameters based on the aggregation results from a number of local models that may be trained on respective local sites. In some aspects of the present disclosure, a federated learning system may refer to, collectively, a network device such as for example a central server and the local computing devices at different local sites and any other systems that may be used for federated learning.

It is to be understood that the methods and systems described herein are not limited to specific methods, specific components, or to particular implementations. It is also to be understood that the terminology used herein is for the purpose of describing particular examples only and is not intended to be limiting.

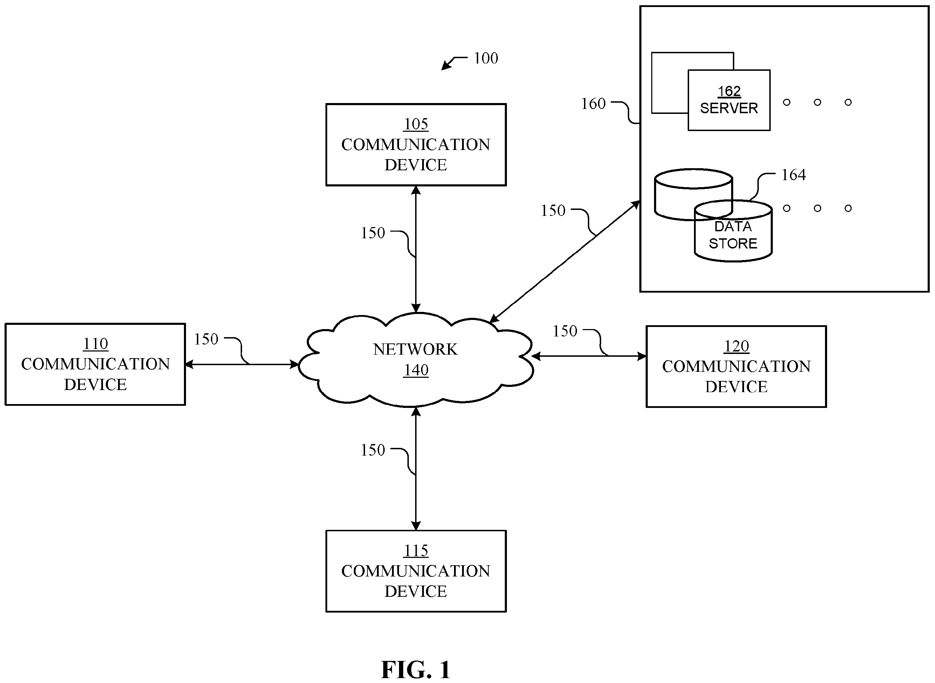

Reference is now made to FIG. 1, which is a block diagram of a system. As shown in FIG. 1, the system 100 may include one or more communication devices 105, 110, 115 and 120 and a network device 160. Additionally, the system 100 may include any suitable network such as, for example, network 140. In some examples, the network 140 may be a Metaverse network. In other examples, the network 140 may be any suitable network capable of provisioning content and/or facilitating communications among entities within, or associated with the network. As an example and not by way of limitation, one or more portions of network 140 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 140 may include one or more networks 140.

Links 150 may connect the communication devices 105, 110, 115 and 120 to network 140, network device 160 and/or to each other. This disclosure contemplates any suitable links 150. In some examples, one or more links 150 may include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In some examples, one or more links 150 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout system 100. One or more first links 150 may differ in one or more respects from one or more second links 150.

In some examples, communication devices 105, 110, 115, 120 may be electronic devices including hardware, software, or embedded logic components or a combination of two or more such components and capable of carrying out the appropriate functionalities implemented or supported by the communication devices 105, 110, 115, 120. As an example, and not by way of limitation, the communication devices 105, 110, 115, 120 may be a computer system such as for example a desktop computer, notebook or laptop computer, netbook, a tablet computer (e.g., a smart tablet), e-book reader, Global Positioning System (GPS) device, camera, personal digital assistant (PDA), handheld electronic device, cellular telephone, smartphone, smart glasses, augmented/virtual reality device, smart watches, charging case, or any other suitable electronic device, or any suitable combination thereof. The communication devices 105, 110, 115, 120 may enable one or more users to access network 140. The communication devices 105, 110, 115, 120 may enable a user(s) to communicate with other users at other communication devices 105, 110, 115, 120.

Network device 160 may be accessed by the other components of system 100 either directly or via network 140. As an example and not by way of limitation, communication devices 105, 110, 115, 120 may access network device 160 using a web browser or a native application associated with network device 160 (e.g., a mobile social-networking application, a messaging application, another suitable application, or any combination thereof) either directly or via network 140. In particular examples, network device 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular examples, each server 162 may include hardware, software, or embedded logic components or a combination of two or more such components for carrying out the appropriate functionalities implemented and/or supported by server 162. In particular examples, network device 160 may include one or more data stores 164. Data stores 164 may be used to store various types of information. In particular examples, the information stored in data stores 164 may be organized according to specific data structures. In particular examples, each data store 164 may be a relational, columnar, correlation, or other suitable database. Although this disclosure describes or illustrates particular types of databases, this disclosure contemplates any suitable types of databases. Particular examples may provide interfaces that enable communication devices 105, 110, 115, 120 and/or another system (e.g., a third-party system) to manage, retrieve, modify, add, or delete, the information stored in data store 164.

Network device 160 may provide users of the system 100 the ability to communicate and interact with other users. In particular examples, network device 160 may provide users with the ability to take actions on various types of items or objects, supported by network device 160. In particular examples, network device 160 may be capable of linking a variety of entities. As an example and not by way of limitation, network device 160 may enable users to interact with each other as well as receive content from other systems (e.g., third-party systems) or other entities, or to allow users to interact with these entities through an application programming interfaces (API) or other communication channels.

It should be pointed out that although FIG. 1 shows one network device 160 and four communication devices 105, 110, 115 and 120, any suitable number of network devices 160 and communication devices 105, 110, 115 and 120 may be part of the system of FIG. 1 without departing from the scope of the present disclosure.

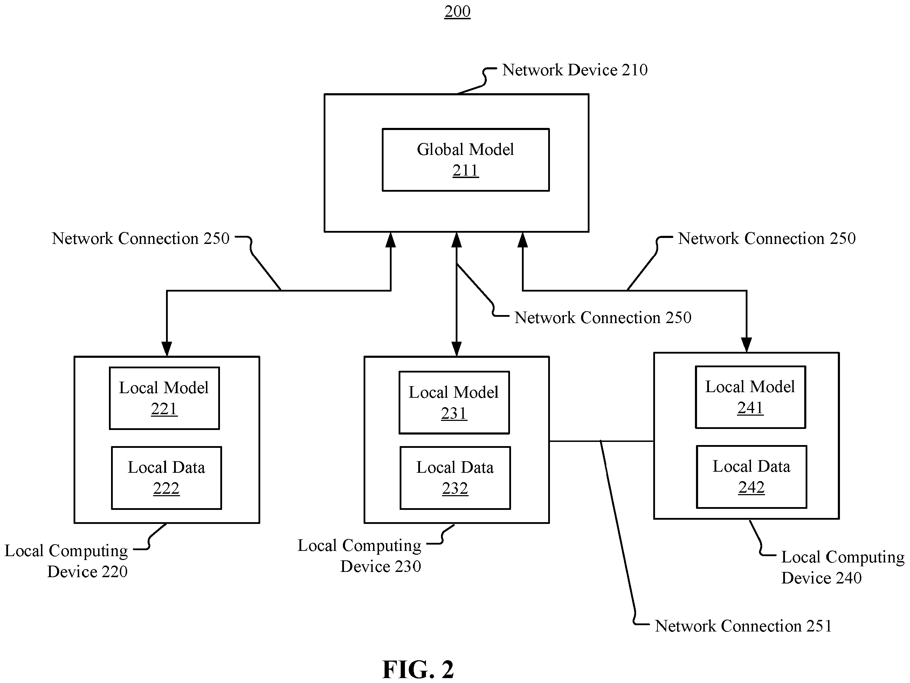

FIG. 2 illustrates an example federated learning system 200. As an example and not by way of limitation, the federated learning system 200 may include a network device 210 (e.g., a central server) and a number of local computing devices (e.g., local computing devices 220, 230, and 240). Each local computing device (e.g., local computing devices 220, 230, and 240) may be connected to the network device 210 through network connections 250. Some local computing devices (e.g., local computing devices 230 and 240) may also be connected to each other through corresponding network connections (e.g., network connection 251). In some examples, the network device 210 may be an example of the network device 160 and the local computing devices 220, 230, 240 may be examples of one or more of communication devices 105, 110, 115 and 120.

In this example, the global model 211 (e.g., a machine leaming model and/or an artificial intelligence model) may be hosted on the network device 210. During the federated learning process, the network device 210 may identify a ML model or an AI model that may need to be trained and may transmit that ML model or AI model in a current state to one or more of the local computing devices (e.g., local computing devices 220, 230, and 240) during a model synchronization process. In the example of FIG. 2, the models that the network device 210 may transmit/provide to the local computing devices 220, 230, 240 may be local models 221, 231, 241, respectively. The models in a current state may be a model having initial model parameters before training or may be a model with current model parameters that may have been partially trained during a previous or most recent training iteration. In some example aspects, random initialization may be applied to initialize model parameters before training of a model. In response, the local model in each communication device (e.g., client device) may be updated with the current global model in response to a most recent training iteration. In response to receiving the model from the network device 210, each of the local computing devices (e.g., local computing devices 220, 230, and 240) may access its local data samples (e.g., local data samples 222, 232, and 242) and may train the corresponding local models (e.g., local models 221, 231, and 241) locally based on the accessed local data samples. As a result, different local models (e.g., local models 221, 231, and 241) may have different model parameter values (also referred to herein as gradients) in response to being trained on/by the corresponding local computing devices using the local data samples of the corresponding local computing device. In some examples, the local data samples 222, 232, 242 may be referred to herein as local data 222, 232, 242. In an instance in which local data samples 222, 232, 242 are different from each other, having the same global model training on these local data samples may lead to different model parameter values, corresponding to local models (e.g., local models 221, 231, and 241).

In response to determining the different parameter values, the local computing devices (e.g., local computing devices 220, 230, and 240) may transmit the trained parameters such as, for example, gradients to the network device 210. In some example aspects, deep learning applications may be utilized to train the local models based on the local data samples to obtain new model parameters. The new model parameters may be achieved in response to the training on training data being done. The network device 210 may aggregate the training results from these local computing devices (e.g., local computing devices 220, 230, and 240) and may integrate the trained parameters to the global model 211. As a result, the global model 211 may be trained without the network device 210 accessing the local data samples (e.g., local data samples 222, 232, and 242) on these local computing devices (e.g., local computing devices 220, 230, and 240).

In some example aspects of the present disclosure, federated learning may be utilized to train ML models and/or AI models while protecting data security and data privacy and reducing data transfer over a network (e.g., minimizing transmission of a large volume of training data associated with deep learning). Unlike traditional distributed learning, federated learning may enable training on heterogeneous datasets without exposing the data from its hosting computing systems. Federated learning may include a number of steps, for example, distributing models to local devices, training respective local models on the corresponding local devices, transmitting training results from the local devices to a network device such as for example a central server, and aggregating the training results of different models to a global model. However, there may be a number of challenges to effectively train a model with the limited information that may be data shared among the local devices (e.g., federated nodes). Furthermore, in traditional federated learning, a central server may aggregate the training results from a number of local devices and may then generate one global model without accessing any data from these local devices. However, the information in the training results may be limited. For instance, typically, a majority of users may only have a few training examples, which may make it challenging to improve the performance of a machine learning model for individual client devices.

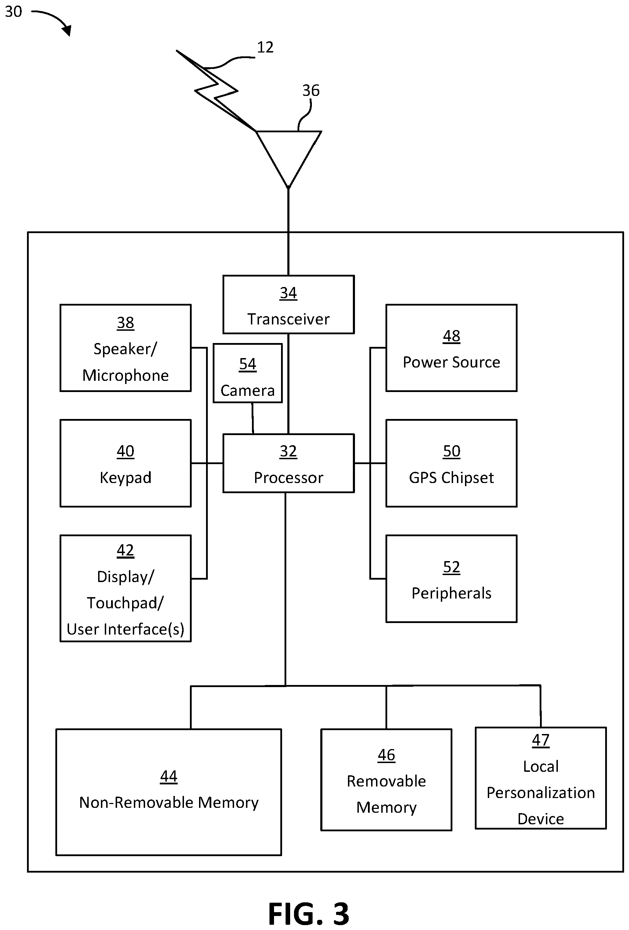

FIG. 3 illustrates a block diagram of an exemplary hardware/software architecture of a communication device such as, for example, user equipment (UE) 30. In some exemplary aspects, the UE 30 may be any of communication devices 105, 110, 115, 120 and/or local computing devices 220, 230, 240. In some exemplary aspects, the UE 30 may be a computer system such as for example a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, smart watch, charging case, or any other suitable electronic device. As shown in FIG. 3, the UE 30 (also referred to herein as node 30) may include a processor 32, non-removable memory 44, removable memory 46, a speaker/microphone 38, a keypad 40, a display, touchpad, and/or indicators 42, a power source 48, a global positioning system (GPS) chipset 50, and other peripherals 52. The power source 48 may be capable of receiving electric power for supplying electric power to the UE 30. For example, the power source 48 may include an alternating current to direct current (AC-to-DC) converter allowing the power source 48 to be connected/plugged to an AC electrical receptable and/or Universal Serial Bus (USB) port for receiving electric power. The UE 30 may also include a camera 54. In an example, the camera 54 may be a smart camera configured to sense images/video appearing within one or more bounding boxes. The UE 30 may also include communication circuitry, such as a transceiver 34 and a transmit/receive element 36. It will be appreciated the UE 30 may include any sub-combination of the foregoing elements while remaining consistent with an example.

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., non-removable memory 44 and/or removable memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example.

The processor 32 is coupled to its communication circuitry (e.g., transceiver 34 and transmit/receive element 36). The processor 32, through the execution of computer executable instructions, may control the communication circuitry in order to cause the node 30 to communicate with other nodes via the network to which it is connected.

The transmit/receive element 36 may be configured to transmit signals to, or receive signals from, other nodes or networking equipment. For example, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another example, the transmit/receive element 36 may be configured to transmit and/or receive both RF and light signals. It will be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multi-mode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, (e.g., non-removable memory 44 and/or removable memory 46) as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other examples, the processor 32 may access information from, and store data in, memory that is not physically located on the node 30, such as on a server or a home computer.

The processor 32 may receive power from the power source 48, and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 32 may also be coupled to the GPS chipset 50, which may be configured to provide location information (e.g., longitude and latitude) regarding the current location of the node 30. It will be appreciated that the node 30 may acquire location information by way of any suitable location-determination method while remaining consistent with an example.

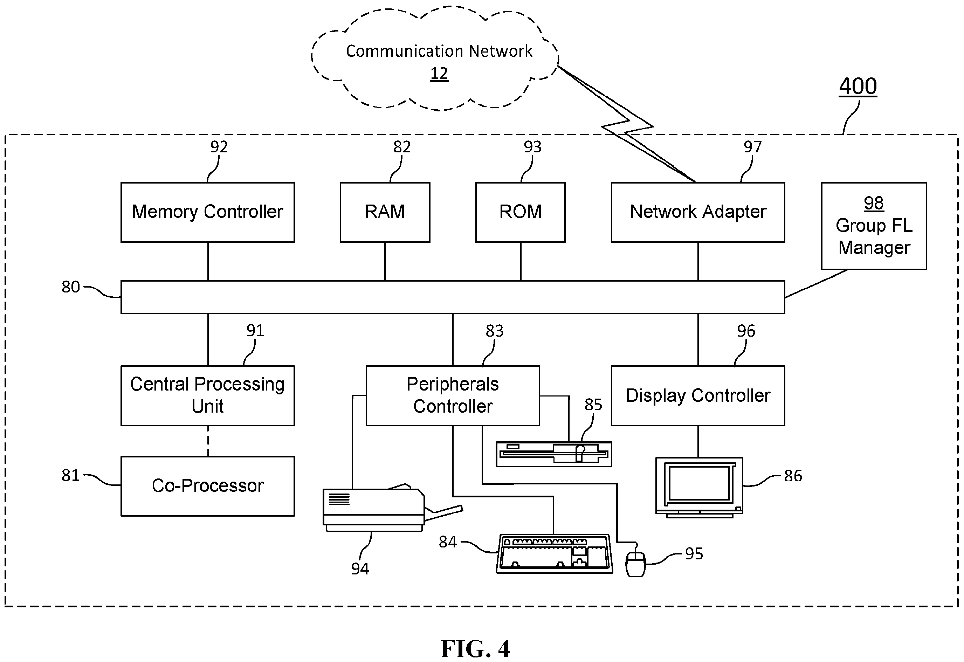

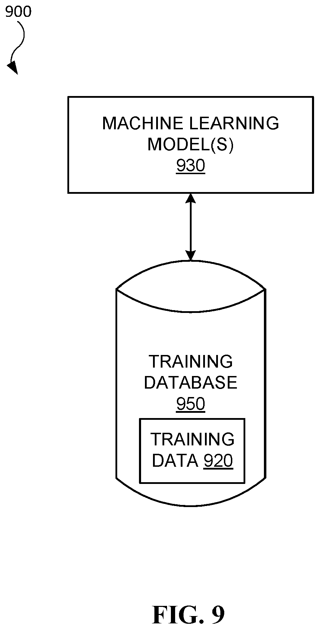

The UE 30 may also include a local personalization device 47 that may identify or access local data (e.g., local data samples 222, 232, 242) associated with a local model(s) (e.g., local models 221, 231, 241) and may determine one or more trained model parameters (e.g., gradients) associated with the local model(s). The determined one or more trained parameters may be sent to a network device (e.g., computing system 400 of FIG. 4). In this regard, the network device may utilize the trained model parameters to partition or assign the UE 30 to a specific group of communication devices (e.g., other UEs 30) that may have a similar model (e.g., local model 221, local model 231, local model 241) such that each of the communication devices of the group may be able to leverage the additional information pertaining to training records associated with the trained parameters of each of the communication devices in the group by learning from the training records of the other communication devices in the group. In this manner, the network device may provide the trained model parameters (e.g., local training data of each of the communication devices in the group) to the communication devices of the group to enable each of the communication devices in the group to increase/enhance their specific personalized model stored on the respective communication devices of the group, as described more fully below. In some example aspects, a model (e.g., local model 221, local model 231, local model 241) of the UEs 30 may be, for example, a machine learning model(s) 930 of FIG. 9.

FIG. 4 is a block diagram of an exemplary computing system 400. In some example aspects of the present disclosure, the network device 160, and/or the network device 210 may be a computing system 400. The computing system 400 may comprise a computer or server and may be controlled primarily by computer readable instructions, which may be in the form of software, wherever, or by whatever means such software is stored or accessed. Such computer readable instructions may be executed within a processor, such as central processing unit (CPU) 91, to cause computing system 400 to operate. In many workstations, servers, and personal computers, central processing unit 91 may be implemented by a single-chip CPU called a microprocessor. In other machines, the central processing unit 91 may comprise multiple processors. Coprocessor 81 may be an optional processor, distinct from main CPU 91, that performs additional functions or assists CPU 91.

In operation, CPU 91 fetches, decodes, and executes instructions, and transfers information to and from other resources via the computer's main data-transfer path, system bus 80. Such a system bus connects the components in computing system 400 and defines the medium for data exchange. System bus 80 typically includes data lines for sending data, address lines for sending addresses, and control lines for sending interrupts and for operating the system bus. An example of such a system bus 80 is the Peripheral Component Interconnect (PCI) bus. In an exemplary aspect, the computing system 400 may include a group FL manager 98 that may provide one or more initial models to communication devices (e.g., UEs 30) to enable the communication devices to locally store the models on the respective communication devices. The group FL manager 98 may receive one or more determined trained model parameters (e.g., gradients) associated with the locally stored models of the communication devices based on the communication devices identifying or accessing local data (e.g., local data samples 222, 232, 242) associated with their local model(s) (e.g., local models 221, 231, 241).

The group FL manager 98 may utilize the trained model parameters to partition or assign a communication device(s) to specific groups/sets of communication devices (e.g., other UEs 30) that may have a similar model (e.g., local model 221, local model 231, local model 241) such that each of the communication devices of the group may be able to leverage additional information pertaining to training records associated with the trained parameters of each of the communication devices in the group by learning from the training records of the other communication devices in the group. In this regard, the group FL manager 98 may provide the trained parameters (e.g., local training data of each of the communication devices in the group) to the communication devices of the group to enable each of the communication devices in the group to increase/enhance their specific personalized model stored on the respective communication devices of the group, as described more fully below. In some example aspects of the present disclosure, a model (e.g., local model 221, local model 231, local model 241) of the communication devices may be, for example, machine learning model(s) 930 of FIG. 9.

Memories coupled to system bus 80 include RAM 82 and ROM 93. Such memories may include circuitry that allows information to be stored and retrieved. ROMs 93 generally contain stored data that cannot easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 400 may contain peripherals controller 83 responsible for communicating instructions from CPU 91 to peripherals, such as printer 94, keyboard 84, mouse 95, and disk drive 85.

Display 86, which is controlled by display controller 96, is used to display visual output generated by computing system 400. Such visual output may include text, graphics, animated graphics, and video. Display 86 may be implemented with a cathode-ray tube (CRT)-based video display, a liquid-crystal display (LCD)-based flat-panel display, gas plasma-based flat-panel display, or a touch-panel. Display controller 96 includes electronic components required to generate a video signal that is sent to display 86.

Further, computing system 400 may contain communication circuitry, such as for example a network adaptor 97, that may be used to connect computing system 400 to an extemal communications network, such as network 12 of FIG. 3, to enable the computing system 400 to communicate with other nodes (e.g., UE 30) of the network.

Federated Learning may help promote data privacy by training a shared model in a decentralized manner on local devices of users since the raw data associated with the shared model typically does not leave and remains stored on the local devices.

However, in an instance in which a majority of users of an application or a system may have a few training examples as training data such few training examples may not be useful to fine-tune a large global federated learning model based on insufficient personal data associated with local models of the local devices of the users that may be typically utilized to facilitate fine tuning of the large global federated learning model.

As such, example aspects of the present disclosure may facilitate partitioning/assigning of groups among communication devices of users, to enable the communication devices of the group to leverage the additional knowledge/information learned from the training records of other communication devices in their group to enhance their own specifically tailored personalized model that may be stored locally on the communication device.

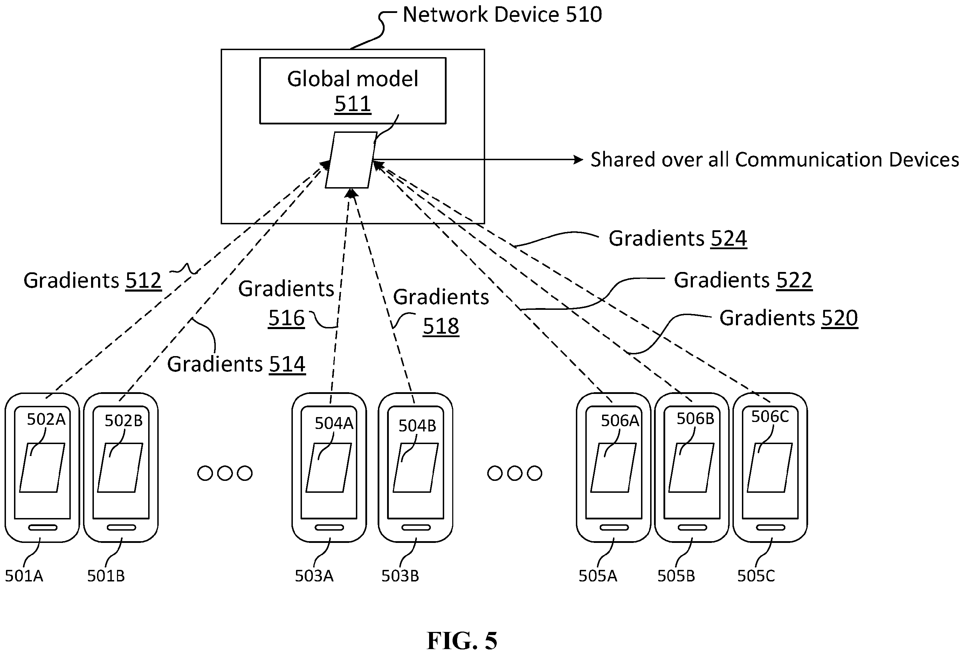

Referring now to FIG. 5, a diagram illustrating federated learning training is provided. In FIG. 5, federated learning training may be applied until convergence is determined. As described above, convergence of a global model may refer to a point in which the federated learning training process may reach a stable state and the model parameters of the model may have settled on values. In some example aspects of the present disclosure, the federated learning training being applied until convergence may be a first phase (e.g., Phase 1) of a group personalized federated learning approach. In the example of FIG. 5, a global FL manager (e.g., global FL manager 98) of a network device 510 (e.g., computing system 400) may manage a global model 511 (e.g., global model 211) and may send one or more model(s) 502A, 502B, 504A, 504B, 506A, 506B, 506C to one or more communication devices 501A, 501B, 503A, 503B, 505A, 505B, 505C. The communication devices 501A, 501B, 503A, 503B, 505A, 505B, 505C may be examples of local computing devices 220, 230, 240 (e.g., UEs 30). In an instance in which the network device 510 sends the models 502A, 502B, 504A, 504B, 506A, 506B, 506C to the communication devices, the models may initially be a same version of the global model 511.

In response to the communication devices receiving the models from the global FL manager 98 of the network device 510, the communication devices may store the models locally (e.g., local models 221, 231, 241). The communication devices may store the models locally in a memory device (e.g., non-removable memory 44, removable memory 46). Initially, the model(s) received by the communication devices from the network device may be the same model(s). In response to usage of the models 502A, 502B, 504A, 504B, 506A, 506B, 506C by the communication devices 501A, 501B, 503A, 503B, 505A, 505B, 505C, a local personalization device (e.g., local personalization device 47) of the communication devices may determine training data (e.g., local data samples 222, 232, 242) associated with the models stored locally. The training data may be updated model parameters such as for example gradients 512, 514, 516, 518, 520, 522, 524 and the communication devices may provide the gradients 512, 514, 516, 518, 520, 522, 524 to the network device 510. The communication devices may preserve privacy data for example by sending the updated model parameters as model updates to the network device 510 instead of sending user data (e.g., raw user data) on the communication devices 501A, 501B, 503A, 503B, 505A, 505B, 505C to the network device 510. The model parameters or gradients may be generated based on the local training data (e.g., local data samples 222, 232, 242) determined based on the user data. As such, the model parameters or gradients may already include information associated with users.

For purposes of illustration and not limitation, for example, the updated training data as updated model parameters (e.g., gradients 512, 514, 516, 518, 520, 522, 524) may be associated with an application corresponding to a model (e.g., models 502A, 502B, 504A, 504B, 506A, 506B, 506C). For example, in an instance in which an application may be an autocorrection application, the updated training data or model parameters may be automatically corrected data (e.g., autocorrection of misspelled words and/or autocorrection of grammar associated with typed words corresponding to the autocorrection application). In example aspects of the present disclosure, the training data may be any suitable training data associated with any type of application(s) and/or model(s).

The network device 510 may receive the model updates for example the gradients 512, 514, 516, 518, 520, 522, 524 from each of the communication devices and may aggregate the gradients 512, 514, 516, 518, 520, 522, 524 to perform model aggregation on the global model 511 to update the global model 511 based on the gradients 512, 514, 516, 518, 520, 522, 524 received from the communication devices. In this regard, the global FL manager 98 of the network device 510 may send model updates as a new version model to the communication devices 501A, 501B, 503A, 503B, 505A, 505B, 505C. To aggregate the global model 511, the global FL manager 98 of the network device 510 may determine an average of the different model parameters associated with model updates, to determine a next iteration/version of the global model 511. For example, by utilizing federated averaging (FA), the model parameters from communication devices may be averaged (e.g., by the global FL manager 98) and the aggregated model parameters may be utilized as a next iteration/version of the global model (e.g., global model 511). The next iteration/new version of the global model 511 may be provided by the global FL manager 98 of the network device 510 to the communication devices 501A, 501B, 503A, 503B, 505A, 505B, 505C to enable the communication devices to update their local models such as for example models 502A, 502B, 504A, 504B, 506A, 506B, 506C. The communication devices may preserve privacy data by sending model updates to the network device instead of user data (e.g., raw user data). Since the user data may not be sent to the network device (e.g., a central server(s)), such may avoid/minimize attempts by attackers from accessing training examples/training data associated with the user data.

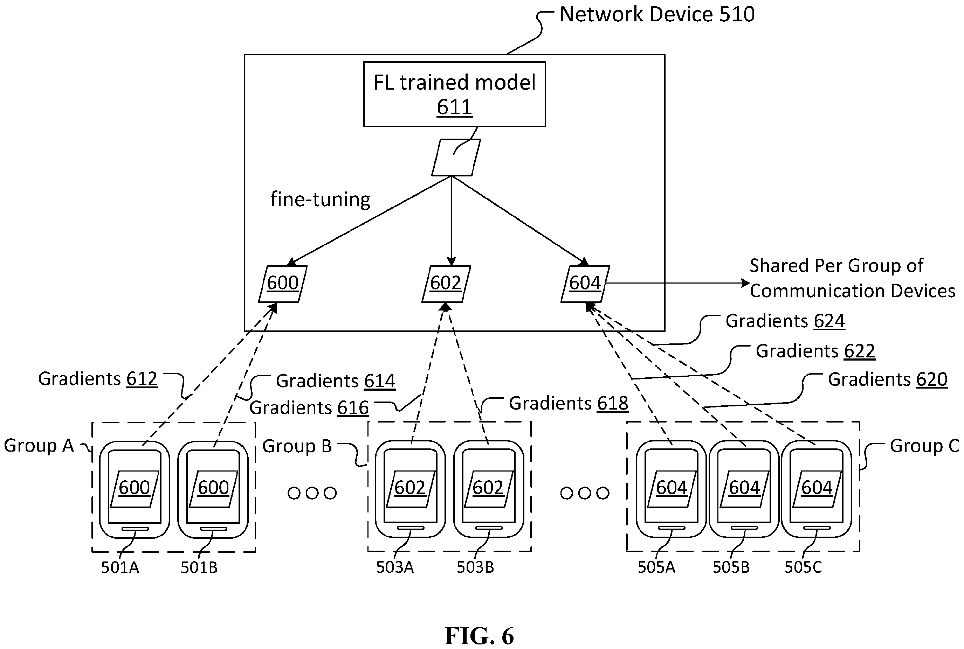

Referring now to FIG. 6, a diagram illustrating partitioning of communication devices into several distinct groups to fine tune the global FL model in the FL framework for the specific distinct groups of communication devices is provided. In this regard, the approach of FIG. 6 may entail a second phase (Phase 2) of group federated learning in which the federated learning communication devices may be partitioned or assigned into several distinct groups. For each partitioned/assigned group of communication devices, the trained global FL model may be further fine-tuned in the FL framework. In this manner, some example aspects of the present disclosure may facilitate personalized FL. Personalized FL may indicate/denote that each of the communication devices of the distinct groups may utilize a different model that may be specifically tailored for the particular communication device. In some examples, the model(s) associated with each of the distinct groups may be similar, however the model(s) may be slightly different for each of the communication devices in the group.

In the example of FIG. 6, in response to receiving the model parameters/model updates such as gradients 512, 514, 516, 518, 520, 522, 524 in the first phase of the group personalized federated learning process, a global FL manager (e.g., global FL manager 98) of a network device 510 may determine one or more distinct groups in which to partition/assign the communication devices 501A, 501B, 503A, 503B, 505A, 505B, 505C. In some example aspects of the present disclosure, the global FL manager 98 may assign groups of users to a specific model(s), associated with the global FL trained model 611 (e.g., global model 511), based on determining one or more common characteristics of the users such as for example similar demographics associated with profiles of users of the communication devices 501A, 501B, 503A, 503B, 505A, 505B, 505C. In some examples, the similar demographics may include, but are not limited to, geographic area (e.g., location) of the users, age of the users, gender of the users, interests of the users and/or the like. The demographics information may be stored or saved in respective profiles of the users of communication devices 501A, 501B, 503A, 503B, 505A, 505B, 505C. The profiles may be stored in a memory device (e.g., RAM 82, ROM 93) of the network device 510. In some example aspects, the use of demographics information of a user(s) may be based on consent of the user(s).

In response to determining common demographics among users, the global FL manager 98 may assign the communication devices of the users determined as having common demographics to a same group. In some example aspects, a predetermined threshold of demographics may be utilized to determine the assigning of communication devices of users to one or more groups. For instance, the predetermined threshold of demographics may, for example, be one or more different age ranges of users and the global FL manager 98 may determine different groups of communication devices of users based on the different age ranges of the users (e.g., users ages ranging from 20 - 25 years old may be assigned to Group A, users ages ranging from 26 - 30 years old may be assigned to Group B, etc.). In some example aspects, the predetermined threshold may vary based on one or more associated models and/or one or more associated applications.

In some other example aspects of the present disclosure, the global FL manager 98 may compare the model gradients (e.g., gradients 512, 514, 516, 518, 520, 522, 524) received from the communication devices in the first phase to determine which groups in which to partition/assign the communication devices. In this regard, the global FL manager 98 may analyze the model gradients (e.g., gradients 512, 514, 516, 518, 520, 522, 524) received from the communication devices 501A, 501B, 503A, 503B, 505A, 505B, 505C to determine which gradients are similar to each other and/or which gradients are dissimilar to each other. In response to determining which gradients are similar, the global FL manager 98 may assign the communication devices having the similar gradients that were sent to the network device 510 to a same group. As described above, groups of communication devices may be determined by clustering model parameters/gradients of different communication devices to group communication devices that may fall within the same cluster determined based on vector differences between model parameters of the communication devices. For example, one or more clustering applications (e.g., k-means applications) may be applied on the model parameters of different communication devices to partition the communication devices into different groups. The metric values, associated with the gradients (e.g., model parameters), in each of the groups may be similar metric values but may not necessarily be the same values. In some examples, the metric values may be a group of numerical vectors. The similarity of any two or more gradients or model parameters may be measured/determined (e.g., by the global FL manager 98) based on a Euclidean distance associated with the two or more gradients or model parameters. In this regard, the smaller the Euclidean distance, the more similarity there may be between the two or more gradients or model parameters.

In the example of FIG. 6, the global FL manager 98 may determine that the communication devices 501A and 501B have users with common/similar characteristics (e.g., demographics information) and/or that the communication devices 501A, 501B are associated with having similar model gradients. In this regard, the global FL manager 98 may assign and send a fine-tuned model 600, associated with global FL trained model 611 (e.g., global model 511), to the communication devices 501A, 501B and may assign/partition the communication devices 501A, 501B to a group such as for example Group A. In a similar manner, the global FL manager 98 may determine that the communication devices 503A and 503B have users with common/similar characteristics (e.g., demographics information) and/or that the communication devices 503A, 503B are associated with having similar model gradients. As such, the global FL manager 98 may assign and send a fine-tuned model 602, associated with global FL trained model 611, to the communication devices 503A, 503B and may assign/partition the communication devices 503A, 503B to a group such as for example Group B.

Additionally, the global FL manager 98 may determine that the communication devices 505A, 505B and 505C have users with common/similar characteristics (e.g., demographics information) and/or that the communication devices 505A, 505B, 505C are associated with having similar model gradients. In response, the global FL manager 98 may assign and send a fine-tuned model 604, associated with global FL trained model 611, to the communication devices 505A, 505B and 505C and may assign/partition the communication devices 505A, 505B, 505C to a group such as for example Group C.

Accordingly, each of the different groups (e.g., Group A, Group B, Group C) may have their own tailored/fine-tuned model that may be provided to the communication devices of the groups by the network device 510. For example, the network device 510 may fine-tune the global trained FL model 611 (also referred to herein global model 611) based on the model parameters/model updates (e.g., gradients (e.g., gradients 512, 514, 516, 518, 520, 522, 524)) determined and received during phase one of the group personalized federated learning process to fine-tune the global model 611 even further and fine-tune models, associated with the global model 611, differently for each of the groups. As such, the fine-tuned models (e.g., fine-tuned models 600, 602, 604) may be different from each other and may be specific/tailored for their respective groups (e.g., Groups A, B, C) of communication devices.

In an instance in which the communication devices of the groups obtain more training data, for example, upon utilizing/implementing the fine-tuned models 600, 602, 604, the communication devices 501A, 501B, 503A, 503B, 505A, 505B, 505C may send other respective gradients 612, 614, 616, 618, 620, 622, 624 to the network device 511. In some example aspects, the gradients 612, 614, 616, 618, 620, 622, 624 may be different and may be associated with different local training data and/or model parameters of the respective communication devices. For purposes of illustration and not of limitation, for example, in an instance in which fine-tuned model 600 may be implemented by communication device 501A, the communication device 501A may obtain/determine different training data than an instance in which fine-tuned model 600 may be implemented by communication device 501B which may obtain/determine other training data.

Additionally for purposes of illustration and not of limitation, in an instance in which a device implements an application such as for example a video application to obtain video data, such video data may for example be the training data/model parameters. Other suitable training data/model parameters may be obtained/determined based on the type of an application associated with the model (e.g., fine-tuned model 602) being implemented by a communication device (e.g., communication device 503A).

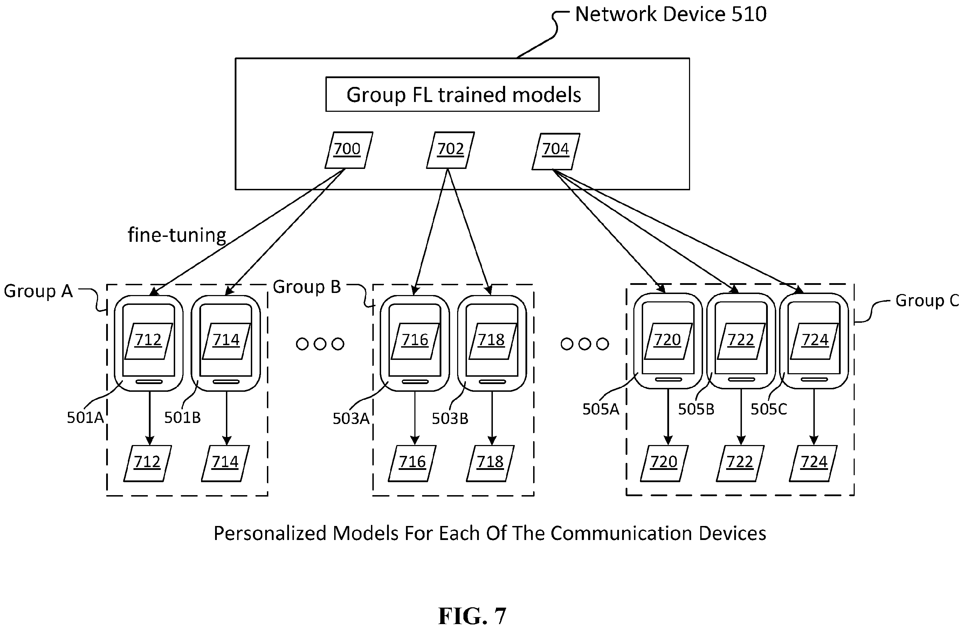

FIG. 7 is a diagram illustrating that for each group-specific model, local personalization may be performed utilizing local training data of the corresponding communication devices. In response to the network device 510 receiving the different and particular gradients 612, 614, 616, 618, 620, 622, 624 from corresponding communication devices 501A, 501B, 503A, 503B, 505A, 505B, 505C, the global FL manager 98 of the network device 510 may optionally perform a phase three (e.g., Phase 3) of the group personalized federated learning process. In this regard, phase three may involve local personalization of group-specific models based on local training data of the corresponding communication devices 501A, 501B, 503A, 503B, 505A, 505B, 505C. For example, in response to receiving, by the network device 510, the different gradients 612, 614, 616, 618, 620, 622, 624 that may correspond to different training data/model parameters of respective communication devices, the global FL manager 98 may generate further fine-tuned models 700, 702, 704 that may be utilized to generate personalized models 712, 714, 716, 718, 720, 722, 724 for each of the communication devices of the specific groups based on the respective gradients of particular corresponding communication devices that generated the gradients.

In the example of FIG. 7, the further fine-tuned models 700, 702, 704 may be group FL trained models associated with global model 611 (e.g., an example of global model 511). The network device 510 may generate fine-tuned model 700, based on gradients 612, 614, to further generate personalized models 712, 714 for the communication devices 501A, 501B of Group A, and may generate fine-tuned model 702, based on gradients 616, 618, to further generate personalized models 716, 718 for the communication devices 503A, 503B of Group B and may generate fine-tuned model 704, based on gradients 620, 622, 624 to further generate personalized models 720, 722, 724 for the communication devices 505A, 505B, 505C of Group C.

The global FL manager 98 of network device 510 may generate personalized models 712, 714, 716, 718, 720, 722, 724 for the communication devices 501A, 501B, 503A, 503B, 505A, 505B, 505C, respectively by using the corresponding gradients 612, 614, 616, 618, 620, 622, 624 of the communication devices. For purposes of illustration and not of limitation, for example, the global FL manager 98 of network device 510 may generate a further fine-tuned personalized model 712 for the communication device 501A by utilizing corresponding gradients 612 that were obtained/determined by the communication device 501A and sent to the network device 510. The other personalized models 714, 716, 718, 720, 722, 724 may be generated by the network device 510 in a similar manner. The personalized models 712, 714, 716, 718, 720, 722, 724 may be different models based in part on different training data accessed by each of the communication devices. In this regard, the network device 510 may leverage the local training data of the communication devices to differentiate specific models tailored for the communication devices of the users within an assigned/partitioned group. This differentiation of specific models tailored for the communication devices of the users within a group may be referred to herein as personalization on each group or local personalization.

In an instance in which the network device 510 may detect that there is a new user associated with a system (e.g., system 100), the network device 510 may first provide a communication device associated with the new user a global model (e.g., global model 511). At the outset, the communication device of the new user may not have any training data, but in response to the communication device of the new user beginning to utilize the global model over a time period, the communication device of the new user may generate some training data. A local personalization device 47 of the communication device of the new user may determine one or more gradients associated with the training data, and the local personalization device 47 may send the gradients to the network device. A global FL manager 98 of the network device may compare these received gradients of the communication device of the new user to other gradients of communication devices of other users employing the global model (e.g., global model 511) and based on this comparison the global FL manager 98 may determine which group the communication device of the new user belongs to and may assign this new user to that group (e.g., Group A).

In an instance in which the network device determines that the new user is assigned to the group (e.g., Group A), then the communication device of the new user may receive all updates regarding associated models, from the network device, that other users of the same assigned group prior received. In this manner, the new user may be current on received models of the assigned group.

In some examples, there may be a predetermined threshold number/quantity of training data that may need to be determined for an application (e.g., an autocorrect application, a video application, etc.) associated with a model (e.g., model 502A) in order to provide gradients associated with the model on a communication device (e.g., communication device 501A) to the network device (e.g., network device 510) to receive updates on associated models (e.g., model 600) from the network device For instance, in some example aspects the predetermined threshold number of training data may be 20 training data examples, 30 training data examples or any other suitable number of training data examples. As referred to herein, training data examples may be items of training data determined (e.g., by a local personalization device 47) based on one or more functions, operations or the like of an application (e.g., an autocorrect application, a video application, etc.) associated with a model (e.g., model 502A).

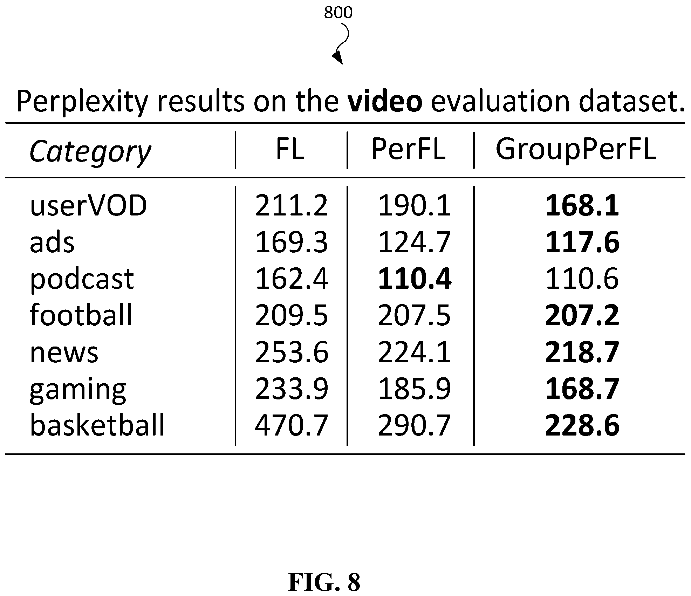

Referring now to FIG. 8, a table illustrating perplexity results on a video evaluation dataset is provided. The table 800 of FIG. 8 indicates that group personalized FL approaches of example aspects of the present disclosure may achieve 20% - 60% perplexity improvement in machine learning (e.g., one or more machine learning functions) in relation to standard FL and personalized FL for a majority of categories of a video dataset associated with, for example, an application that facilitates presentation of video content.

The lower the value of the perplexity results the better in terms of the capability of a model to make/determine predictions and improve the accuracy in determining the predictions. As shown in the table 800 of FIG. 8, the group personalized FL techniques of the example aspects of the present disclosure may indicate perplexity values lower than the values in relation to regular FL and personalized FL. Thus, the group personalized FL techniques of the example aspects of the present disclosure may provide significant technical improvements with regards to improving the capability of a model(s) (e.g., a ML model and/or an AI model (e.g., machine learning model(s) 930)) to make/determine predictions and to improve the accuracy in determining the predictions of a model(s) relative to regular FL and personalized FL.

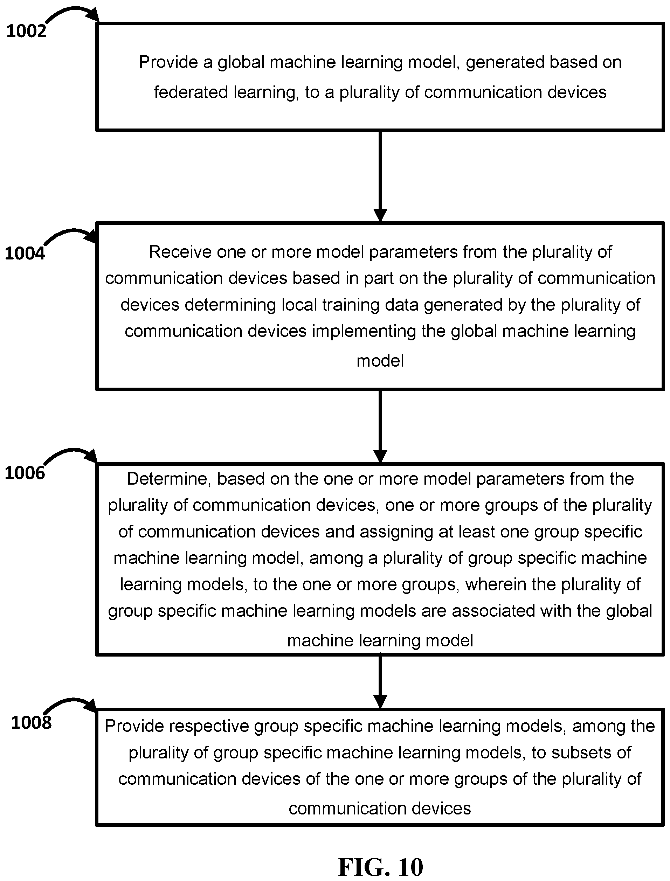

FIG. 9 illustrates an example of a machine learning framework 900 including machine learning model(s) 930 and a training database 950, in accordance with one or more examples of the present disclosure. The training database 950 may store training data 920. In some examples, the machine learning framework 900 may be hosted locally in a computing device or hosted remotely. By utilizing the training data 920 of the training database 950, the machine learning framework 900 may train the machine learning model(s) 930 to perform one or more functions, described herein, of the machine learning model(s) 930. In some examples, the machine learning model(s) 930 may be stored in a computing device. For example, the machine learning model(s) 930 may be embodied within a communication device (e.g., UE 30). In some other examples, the machine learning model(s) 930 may be embodied within another device (e.g., computing system 400). Additionally, the machine learning model(s) 930 may be processed by one or more processors (e.g., processor 32 of FIG. 3, coprocessor 81 of FIG. 4). In some examples, the machine learning model(s) 930 may be associated with operations (or performing operations) of FIG. 10. In some other examples, the machine learning model(s) 930 may be associated with other operations.

In an example, the training data 720 may include attributes of thousands of objects. For example, the objects may be posters, brochures, billboards, menus, goods (e.g., packaged goods), books, groceries, Quick Response (QR) codes, smart home devices, home and outdoor items, household objects (e.g., furniture, kitchen appliances, etc.) and any other suitable objects. In some other examples, the objects may be smart devices (e.g., UEs 30, communication devices 105, 110, 115, 120, local computing devices 220, 230, 240, etc.), persons (e.g., users), newspapers, articles, flyers, pamphlets, signs, cars, content items (e.g., messages, notifications, images, videos, audio), and/or the like. Attributes may include, but are not limited to, the size, shape, orientation, position/location of the object(s), etc. The training data 920 employed by the machine learning model(s) 930 may be fixed or updated periodically. Alternatively, the training data 920 may be updated in real-time based upon the evaluations performed by the machine learning model(s) 930 in a non-training mode. This may be illustrated by the double-sided arrow connecting the machine learning model(s) 930 and stored training data 920. Some other examples of the training data 920 may include, but are not limited to, data items (e.g., training data examples) associated with one or more functions, operations or the like of an application(s) associated with the machine learning model(s) 930. In some example aspects, the use of training data by the machine learning model(s) 930 and/or the application(s) may be based on consent of a user(s). In some examples, the training data 920 may be utilized by the machine learning framework 900 to determine one or more model parameters and/or gradients (e.g., gradients 512, 514, 516, 518, 520, 522, 524, 612, 614, 616, 618, 620, 622, 624) for a machine learning model(s) 930. The model parameters and/or gradients may be numerical metrics and the model parameters and/or gradients may be determined by training models utilizing user data, for example, by utilizing a gradient descent application. In some examples, the model parameters and/or gradients may be determined by the global FL manager 98 implementing the training models that may utilize the user data.

FIG. 10 illustrates an example flowchart illustrating operations for providing group personalized federated learning according to an example of the present disclosure. At operation 1002, a device (e.g., network device 510, computing system 400) may provide a global machine learning model, generated based on federated learning, to a plurality of communication devices. In some examples, the global machine learning model may, but need not, be an example of global model 511 and the plurality of communication devices may be examples of communication devices 501A, 501B, 503A, 503B, 505A, 505B, 505C.

At operation 1004, a device (e.g., network device 510, computing system 400) may receive one or more model parameters (e.g., gradients 512, 514, 516, 518, 520, 522, 524) from the plurality of communication devices based in part on the plurality of communication devices determining local training data generated by the plurality of communication devices implementing the global machine learning model. In some example aspects of the present disclosure, the local training data may be determined by a local personalization device 47 in response to determining that an application or the like, associated with the global machine learning model, performed or implemented a function, operation or the like. The result(s) of the function, operation or the like may, but need not, be an example of the local training data. Additionally, in some examples, the receiving of the one or more model parameters may be in response to determining that the local training data satisfies a predetermined threshold of training data (e.g., a predetermined threshold number/quantity of training data). The local training data may be stored locally on corresponding communication devices.

At operation 1006, a device (e.g., network device 510, computing system 400) may determine, based on the one or more model parameters from the plurality of communication devices, one or more groups (e.g., Groups A, B, C) of the plurality of communication devices and may assign at least one group specific machine learning model, among a plurality of group specific machine learning models, to the one or more groups. The plurality of group specific machine learning models may be associated with the global machine learning model. In some example aspects of the present disclosure, the group specific machine learning models may, but need not, be examples of models 502A, 502B, 504A, 504B, 506A, 506B, 506C.

At operation 1008, a device (e.g., network device 510, computing system 400) may provide respective group specific machine learning models, among the plurality of group specific machine learning models, to subsets of communication devices of the one or more groups of the plurality of communication devices. In some example aspects of the present disclosure, the group specific machine learning models may, but need not, be examples of models 600, 602, 604.

In some examples, a device (e.g., network device 510, computing system 400) may receive updated model parameters, from the subsets of the communication devices of the one or more groups. The received updated model parameters may be in response to the subsets of the communication devices determining items of local training content generated by the subsets of the communication devices implementing a respective group specific machine learning model (e.g., model 600) assigned to at least one group (e.g., Group A) of the one or more groups (e.g., Groups A, B, C). In some examples, the received updated model parameters may, but need not, be examples of gradients 612, 614, 616, 618, 620, 622, 624. In some other examples, the respective group specific machine learning models may, but need not, be models 600, 602, 604.

In some example aspects of the present disclosure, a device (e.g., network device 511, computing system 400) may generate other machine learning models (e.g., models 712, 714, 716, 718, 720, 722, 724). At least one of the other machine learning models may be specifically tailored to each of the communication devices (e.g., communication devices 503A, 503B, etc.) of the one or more groups (e.g., Group B, etc.) in response to receiving the updated model parameters from the subsets of the communication devices of the one or more groups. The other machine learning models (e.g., models 712, 714, 716, 718, 720, 722, 724) may be different machine learning models personalized for at least one user of a communication device of the subsets of communication devices.

In some other example aspects, a device (e.g., network device 510, computing system 400) may determine at least one perplexity value (e.g., perplexity values 168.1, 117.6 in table 800 of FIG. 8) indicating an improvement of group personalized federated learning associated with the one or more groups assigned specific models in relation to one or more other types of federated learning (e.g., regular FL, personalized FL) in response to implementing the at least one of the other machine learning models (e.g., model 714).

In some other example aspects, a device (e.g., network device 510, computing system 400) may determine the one or more groups of the plurality of communication devices and may perform the assigning of the at least one group specific machine learning model to the one or more groups by determining one or more shared characteristics of users of the communication devices or determining that items of the one or more model parameters are similar (e.g., similar model parameter values) among communication devices of the groups. The shared characteristics of the users may, but need not, be a plurality of determined items of demographic information that the users have in common.

The foregoing description of the examples has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as components, without loss of generality. The described operations and their associated components may be embodied in software, firmware, hardware, or any combinations thereof.

Any of the steps, operations, or processes described herein may be performed or implemented with one or more hardware or software components, alone or in combination with other devices. In one example, a software component is implemented with a computer program product comprising a computer-readable medium containing computer program code, which can be executed by a computer processor for performing any or all of the steps, operations, or processes described.

Examples also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples also may relate to a product that is produced by a computing process described herein. Such a product may comprise information resulting from a computing process, where the information is stored on a non-transitory, tangible computer readable storage medium and may include any example of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method comprising:
providing a global machine learning model, generated based on federated learning, to a plurality of communication devices;
receiving one or more model parameters from the plurality of communication devices based in part on the plurality of communication devices determining local training data generated by the plurality of communication devices implementing the global machine learning model;
determining, based on the one or more model parameters from the plurality of communication devices, one or more groups of the plurality of communication devices and assigning at least one group specific machine learning model, among a plurality of group specific machine learning models, to the one or more groups, wherein the plurality of group specific machine learning models are associated with the global machine learning model; and
providing respective group specific machine learning models, among the plurality of group specific machine learning models, to subsets of communication devices of the one or more groups of the plurality of communication devices.

2. The method of claim 1, further comprising:
receiving updated model parameters, from the subsets of the communication devices of the one or more groups, in response to the subsets of the communication devices determining items of local training content generated by the subsets of the communication devices implementing a respective group specific machine learning model assigned to at least one group of the one or more groups.

3. The method of claim 2, further comprising:
generating other machine learning models, wherein at least one of the other machine learning models are specifically tailored to the communication devices of the one or more groups in response to receiving the updated model parameters from the subsets of the communication devices of the one or more groups.

4. The method of claim 3, wherein:
the other machine learning models are different machine learning models personalized for at least one user of a communication device of the subsets of the communication devices.

5. The method of claim 3 or 4, wherein:
the other machine learning models are associated with the global machine learning model.

6. The method of any of claims 3 to 5, further comprising:
determining at least one perplexity value indicating an improvement of group personalized federated learning associated with the one or more groups in relation to one or more other types of federated learning in response to implementing the at least one of the other machine learning models.

7. The method of any preceding claim, wherein:
receiving the one or more model parameters further comprises determining that the local training data satisfies a predetermined threshold of training data.

8. The method of any preceding claim, wherein:
determining the one or more groups of the plurality of communication devices and the assigning of the at least one group specific machine learning model to the one or more groups comprises determining one or more shared characteristics of users of the communication devices or determining that items of the one or more model parameters are similar among the communication devices of the one or more groups.

9. The method of claim 8, wherein the shared characteristics of the users comprise a plurality of determined items of demographic information that the users have in common.

10. An apparatus comprising:
one or more processors; and
at least one memory storing instructions, that when executed by the one or more processors, cause the apparatus to carry out the method of any preceding claim.

11. A computer-readable medium storing instructions that, when executed by a processor, cause the processor to carry out the method of any of claims 1 to 9.

12. A computer program product comprising instructions which, when the program is executed by a computer, cause the computer to carry out the method of any of claims 1 to 9.
